# EUROPEAN PATENT APPLICATION

(11) **EP 1 319 531 A2**
(43) Date of publication of application: **18.06.2003**
(21) Application number: 02252956.4
(22) Date of filing: 26.04.2002
(51) Int. Cl.: B60C 23/04

(54) **Tire condition monitoring apparatus and method**

(30) Priority: 12.12.2001 JP 2001378144
(71) Applicant: Pacific Industrial Co., Ltd., Ogaki-shi, Gifu-ken 503-8603 (JP)
(72) Inventor: Sawafuji, Kazunori, c/o Pacific Ind. Co., Ltd, Ogaki-shi, Gifu-ken, 503-8603 (JP)
(74) Representative: Browne, Robin Forsythe, Dr.

(57) **Abstract**

A tire condition monitoring apparatus (1) includes a plurality of transmitters (30), each of which is located in one of tires (21, 22, 23, 24), a reception antenna (41), and a receiver (40). Each transmitter (30) transmits a radio signal that includes data representing the condition of the corresponding tire (21, 22, 23, 24). The reception antenna (41) induces a voltage signal based on the reception of the radio signal. When one of the transmitters (30) transmits a radio signal, the receiver (40) determines the position of the tire (21, 22, 23, 24) in which the transmitter (30) that has transmitted the radio signal is located based on the pattern of the voltage signal induced by the reception antenna (41). Therefore, even when the positions of the tires (21, 22, 23, 24) are changed, the receiver (40) can easily identify the tire (21, 22, 23, 24) that corresponds to the received data.

## Description

### BACKGROUND OF THE INVENTION

The present invention relates to an apparatus and method for monitoring the conditions of automobile tires. More particularly, the present invention pertains to a wireless tire condition monitoring apparatus and method that allows a driver in a vehicle passenger compartment to check the tire conditions such as the air pressure of the tire.

Wireless tire condition monitoring apparatuses have been proposed for allowing a driver in a vehicle passenger compartment to check the conditions of vehicle tires. Such monitoring apparatus includes transmitters and a receiver. Each transmitter is located in one of the tires and the receiver is located in the body frame of the vehicle. Each transmitter detects the conditions such as air pressure and the temperature of the associated tire and wirelessly transmits the detection information. The receiver receives the information from the transmitters via an antenna provided on the receiver. The condition of each tire is then displayed, for example, on the indicator located near the driver's seat.

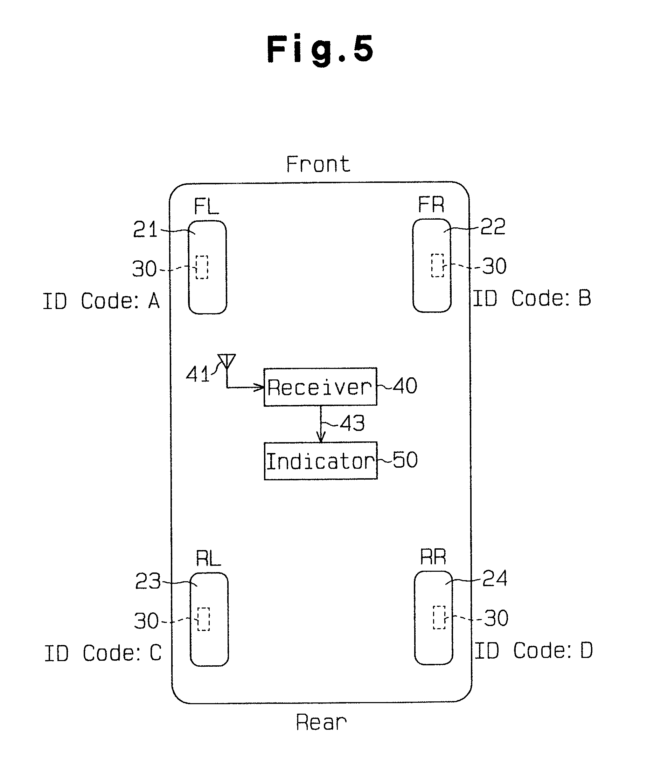

Fig. 5 shows such an apparatus used in a vehicle having four tires 21, 22, 23, and 24. The apparatus includes four transmitters 30, each of which is located in one of the tires 21-24, a receiver 40, and an indicator 50. A unique ID code is registered in each transmitter 30. For example, an ID code A is registered in the transmitter 30 of the tire 21, an ID code B is registered in the transmitter 30 of the tire 22, an ID code C is registered in the transmitter 30 of the tire 23, and an ID code D is registered in the transmitter 30 of the tire 24. The receiver 40 links the ID code A, B, C, D of each transmitter with data representing the position of each tire 21, 22, 23, and 24 and stores the data. For example, the position of the front left tire 21 is indicated by FL, the position of the front right tire 22 is indicated by FR, the position of the rear left tire 23 is indicated by RL, and the position of the rear right tire 24 is indicated by RR. When the transmitter 30 located in the front right tire 22 sends a signal that includes data representing its ID code B and the tire condition, the receiver 40 receives the signal through a reception antenna 41. The receiver 40 controls the indicator 50 to display the data representing the condition of the tire 22 with the position information of the tire 22 (FR).

When the position of any of the tires 21, 22, 23, or 24 is changed, the position information of the moved tire 21, 22, 23, or 24, which is registered in the receiver 40 in connection with the ID code A, B, C, or D of the associated transmitter 30, needs to be changed in accordance with the new position of the moved tire 21, 22, 23, or 24. To register the ID code and the position information in the receiver 40, an operator needs to manipulate the receiver 40 following a predetermined registration procedure. It is troublesome to perform the registration procedure manually every time the position of any of the tires 21, 22, 23, or 24 is changed.

### SUMMARY OF THE INVENTION

Accordingly, it is an objective of the present invention to provide a tire condition monitoring apparatus that automatically determines the position of a tire in which a transmitter that has transmitted a radio signal is located and that does not require an operator to register the information related to transmitters and the positions of the tires.

To achieve the above objective, the present invention provides a tire condition monitoring apparatus for monitoring the condition of tires of a vehicle. The apparatus includes a plurality of transmitters, a reception antenna, and a receiver. Each transmitter is arranged in one of the tires and transmits a radio signal that includes data representing the condition of the corresponding tire. The reception antenna induces a voltage signal based on the receipt of the radio signal. The receiver receives and processes the voltage signal from the reception antenna. When one of the transmitters transmits a radio signal, the receiver determines the position of the tire in which the transmitter that has transmitted the radio signal is located based on the pattern of the voltage signal induced by the reception antenna.

The present invention also provides a tire condition monitoring method for monitoring the condition of tires of a vehicle. The method includes: transmitting a radio signal from one of a plurality of transmitters, each of which is located in one of the tires, wherein the radio signal includes data representing the condition of the corresponding tire; inducing a voltage signal based on the receipt of the radio signal by a reception antenna; and determining the position of the tire in which the transmitter that has transmitted the radio signal is located based on the pattern of the voltage signal induced by the reception antenna.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1(a) is a block diagram illustrating a tire condition monitoring apparatus according to a first embodiment of the present invention;
Fig. 1(b) is a diagram illustrating the relationship between the transmitter in a vehicle tire and a reception antenna;
Fig. 2 is a block diagram illustrating the transmitter of the tire condition monitoring apparatus shown in Fig. 1(a);
Fig. 3 is a block diagram illustrating the receiver of the tire condition monitoring apparatus shown in Fig. 1(a);
Fig. 4 is a diagram illustrating four pattern data of induced voltage stored in the receiver of Fig. 3; and
Fig. 5 is a block diagram illustrating a prior art tire condition monitoring apparatus.

### DETAILED DESCRIPTION OF THE PREFERRED EMBODIMENTS

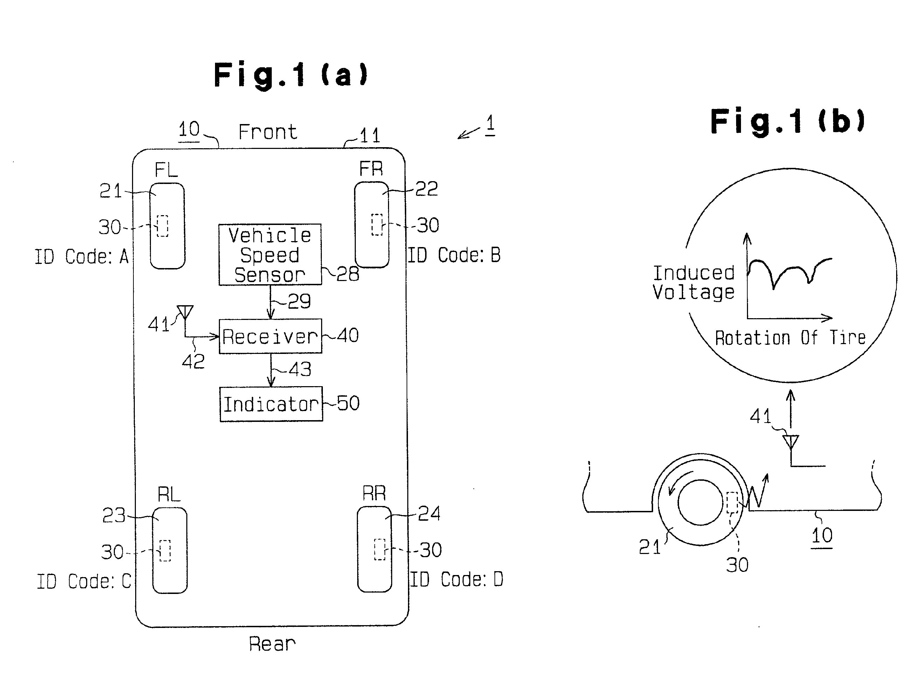

A tire condition monitoring apparatus 1 according to one embodiment of the present invention will now be described with reference to Figs. 1(a) to 4.

As shown in Fig. 1(a), the tire condition monitoring apparatus 1 includes four transmitters 30 and a receiver 40. Each of the transmitters 30 is arranged in one of tires 21, 22, 23, and 24 of a vehicle 10. The receiver 40 is located in a body frame 11 of the vehicle 10.

Each transmitter 30 is secured to the wheel of the associated tire 21, 22, 23, and 24 such that the transmitter 30 is located within the tire 21, 22, 23, and 24. Each transmitter 30 detects the condition of the corresponding tire 21, 22, 23, or 24, that is, the air pressure of the tire 21, 22, 23, or 24. The transmitter 30 then transmits a radio signal, which includes data representing, for example, the detected air pressure, to the receiver 40.

The receiver 40 is located at a predetermined position in the body frame 11 and is activated by the current supply from a battery (not shown) of the vehicle 10. A reception antenna 41 is connected to the receiver 40 with an antenna cable 42. A coaxial cable, which is not easily affected by noise, is preferably used as the antenna cable 42. The receiver 40 receives data transmitted from the transmitters 30 through the reception antenna 41. More specifically, when each transmitter 30 wirelessly transmits the data by radio wave to the reception antenna 41, the reception antenna 41 induces voltage corresponding to the electric field strength of the radio wave that has been received. The reception antenna 41 subsequently sends a signal representing the voltage that has been induced (voltage signal) to the receiver 40.

A vehicle speed sensor 28 detects the speed of the vehicle 10 and sends the detected speed data to the receiver 40 through a sensor cable 29. The speed data correlates with the rotational speed of the tires 21, 22, 23, and 24.

An indicator 50 is arranged in the vehicle compartment such that a driver of the vehicle 10 can see the indicator 50. The indicator 50 is connected to the receiver 40 through an indicator cable 43.

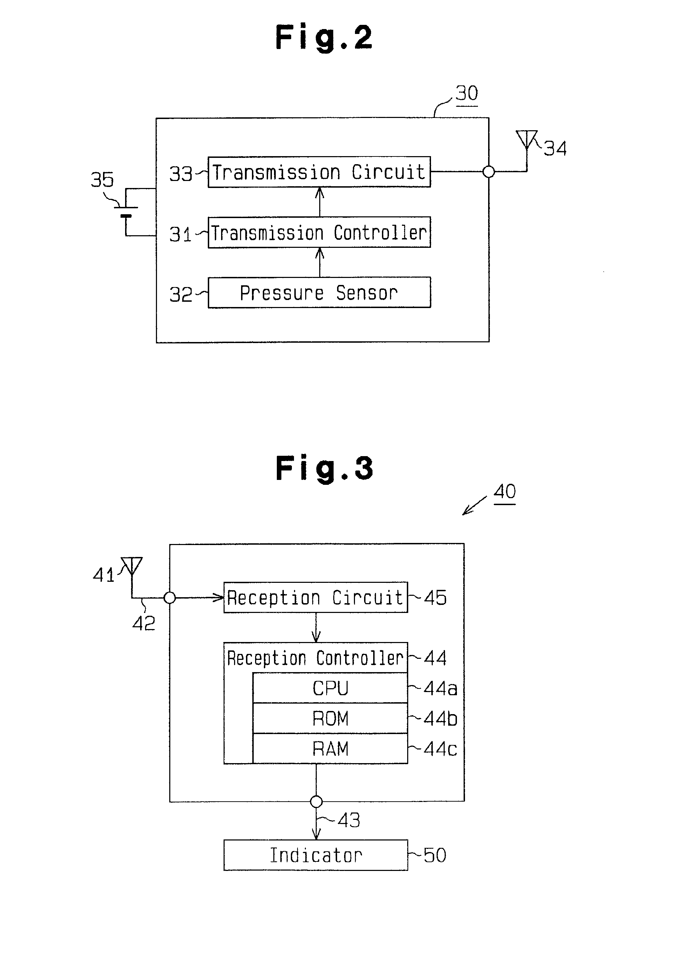

As shown in Fig. 2, each transmitter 30 includes a transmission controller 31, which is, for example, a microcomputer. The controller 31 includes a central processing unit (CPU), a read only memory (ROM), and a random access memory (RAM). A unique ID code is registered as an identification data in an internal memory of each transmission controller 31 such as the ROM. More specifically, as shown in Fig. 1(a), an ID code A is registered in the transmitter 30 of the tire 21, an ID code B is registered in the transmitter 30 of the tire 22, an ID code C is registered in the transmitter 30 of the tire 23, and an ID code D is registered in the transmitter 30 of the tire 24. Each ID code is used to distinguish the associated transmitter 30 from the other three transmitters 30.

As shown in Fig. 2, each transmitter 30 also includes a pressure sensor 32 and a transmission circuit 33. Each pressure sensor 32 detects the internal air pressure of the associated tire 21, 22, 23, or 24 and sends the data representing the detected pressure to the corresponding transmission controller 31. The transmission controller 31 then sends the data representing the detected pressure and the ID code registered in the internal memory to the corresponding transmission circuit 33. The transmission circuit 33 encodes and modulates the data sent from the transmission controller 31 and then transmits a radio signal representing the data to the receiver 40 through a transmission antenna 34. As for the modulation method of the transmission data, for example, a frequency modulation is used.

The transmission controller 31 basically controls the transmission circuit 33 to transmit data at predetermined time intervals. The transmission controller 31 also controls the timing of transmission such that each transmitter 30 transmits data at a different timing from one another. This significantly reduces the possibility of two or more transmitters 30 transmitting the data simultaneously. Thus, the possibility that the receiver 40 receives overlaid data is significantly reduced. Each transmitter 30 has a battery 35 and is activated by the current supply therefrom.

As shown in Fig. 3, the receiver 40 has a reception controller 44 and a reception circuit 45 for processing the received data. The reception controller 44, which is, for example, a microcomputer, includes a CPU 44a, a ROM 44b, and a RAM 44c. The CPU 44a controls the receiver 40. The RAM 44c temporarily stores information. The ROM 44b stores a program for controlling the receiver 40.

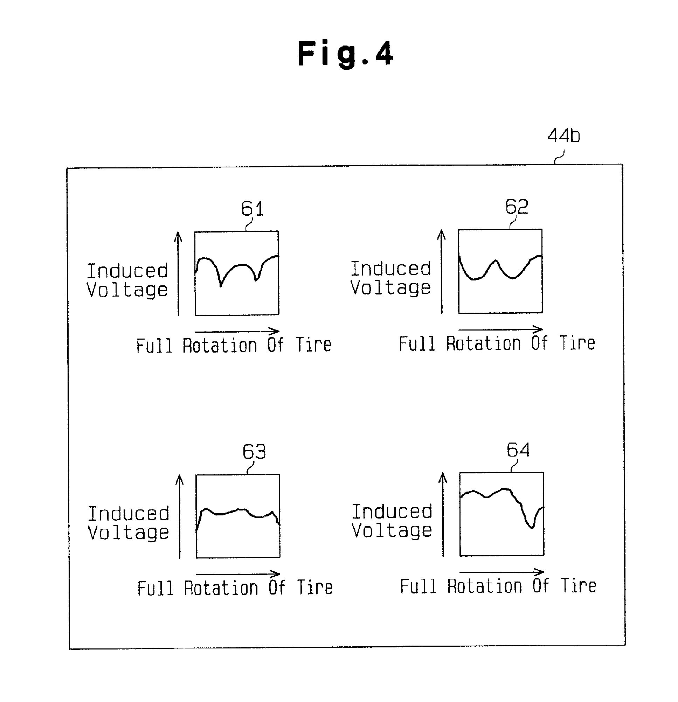

The variation pattern of the level of the voltage induced by the reception antenna 41 differs according to the radio wave transmitted from the transmitter 30 located in each tire 21, 22, 23, and 24. The data representing each variation pattern of the level of the voltage induced by the reception antenna 41 is registered in the ROM 44b in advance. More specifically, as shown in Fig. 4, data 61, 62, 63, and 64 representing the variation pattern of the level of the voltage induced by the reception antenna 41 during a full rotation of the corresponding tire 21, 22, 23, and 24 is stored in the ROM 44b in advance as reference pattern data.

The voltage induced by the reception antenna 41 varies depending on the position and the direction of the transmitter 30 that has transmitted the radio signal with respect to the reception antenna 41. That is, as shown in Fig. 1(b), the level of the voltage induced by the reception antenna 41, or the electric field strength of the radio wave at the reception antenna 41, varies as the tire 21, 22, 23, or 24 that accommodates the transmitter 30 that has transmitted the radio signal is rotated. (The variation patterns of the level of the voltage illustrated in Fig. 1(b) do not represent the modulation pattern of the radio wave.) Therefore, the variation pattern of the level of the induced voltage during a full rotation of each tire 21, 22, 23, and 24 also differs from one another based on the position of the tire 21, 22, 23, and 24.

The ROM 44b stores four different voltage pattern data (reference pattern data) 61, 62, 63, and 64 as shown in Fig. 4. Each voltage pattern data corresponds to the position information of one of the four tires 21, 22, 23, or 24. The voltage pattern data 61, 62, 63, and 64 can be obtained by performing an experiment with monitoring apparatus installed in the vehicle 10 or by performing a simulation. The voltage pattern data 61, 62, 63, and 64 is stored as the data that is obtained when the speed of the vehicle 10, or the rotational speed of the associated tire 21, 22, 23, and 24, is at a predetermined speed.

The reception circuit 45 receives the data transmitted from each transmitter 30 through the reception antenna 41. The reception circuit 45 demodulates and decodes the received data and transmits the data to the reception controller 44. That is, the reception circuit 45 draws out required data from the voltage signal induced by the reception antenna 41 and transmits the data to the reception controller 44.

The reception controller 44 obtains the ID code and the air pressure based on the received data. The reception controller 44 compares the actual variation pattern of the voltage induced by the reception antenna 41 with four voltage pattern data 61, 62, 63, and 64 stored in the ROM 44b taking into consideration of the speed data supplied from the vehicle speed sensor 28. Then, the reception controller 44 determines the position of the tire 21, 22, 23, and 24 in which the transmitter 30 that has transmitted the radio signal is located based on the comparison. As a result, the receiver 40 obtains the position of the tire 21, 22, 23, or 24 in which the transmitter 30 that has transmitted the radio signal is located and the air pressure of the corresponding tire 21, 22, 23, or 24.

When the vehicle 10 is stopped or almost stopped because the vehicle 10 is caught in a traffic jam or waiting for a traffic light to turn green, the voltage induced by the reception antenna 41 does not change much, though the radio wave is transmitted from each transmitter 30 in the corresponding tire 21, 22, 23, and 24. However, the reception circuit 45 determines from which of the tires 21, 22, 23, or 24 the data is received based on the characteristic portion of the pattern of the voltage induced by the reception antenna 41 if the characteristic portion is received. The characteristic portion may be the maximum or minimum level of the induced voltage. In other words, when the vehicle 10 is driving slowly, the induced voltage pattern for full rotation of each tire might not be obtained. However, the reception circuit 45 can determine the position of the tire 21, 22, 23, or 24 in which the transmitter 30 that has transmitted the radio signal is located without receiving the induced voltage pattern for full rotation of the tire if the reception circuit 45 can determine to which of the four voltage pattern data 61, 62, 63, or 64 stored in the receiver 40 the received voltage pattern corresponds.

The reception controller 44 controls the indicator 50 to display the information concerning the air pressure together with the information concerning the position of the associated tire 21, 22, 23, or 24. Particularly, if the air pressure of the associated tire 21, 22, 23, or 24 is abnormal, the information indicating the abnormality of the air pressure is also displayed in the indicator 50.

The above embodiment has the following advantages.
(1) The receiver 40 determines from which of the tires 21, 22, 23, or 24 the data is received by comparing the variation pattern of the voltage induced by the reception antenna 41 corresponding to the radio wave from each transmitter 30 with the voltage pattern data 61, 62, 63, and 64 stored in the receiver 40 in advance. Therefore, even when the position of any of the tires 21, 22, 23, or 24 is changed, the receiver 40 can easily identify one of the tires 21, 22, 23, 24 that corresponds to the received data. Particularly, if the air pressure in any of the tires 21, 22, 23, or 24 is abnormal, a driver is promptly and reliably notified of the tire 21, 22, 23, or 24 that has the abnormal pressure.
(2) Even if the position of any of the tires 21, 22, 23, or 24 is changed, it is not required to register the ID code A, B, C, and D of the corresponding transmitter 30 and the position information of the associated tire 21, 22, 23, and 24 in the receiver 40.
(3) When the vehicle 10 is stopped or almost stopped because the vehicle 10 is caught in a traffic jam or waiting for a traffic light to turn green, the receiver 40 can possibly determine from which of the tires 21, 22, 23, or 24 the data is received based on the characteristic portion of the pattern of the voltage induced by the reception antenna 41 corresponding to the radio wave from each transmitter 30. Therefore, even when the vehicle 10 is stopped or almost stopped because the vehicle 10 is caught in a traffic jam or waiting for a traffic light to turn green, the receiver 40 can possibly identify one of the tires 21, 22, 23, or 24 that corresponds to the received data.
(4) The reception controller 44 compares the variation pattern of the voltage actually induced by the reception antenna 41 with the four voltage pattern data 61, 62, 63, and 64 stored in the ROM 44b, taking into consideration of the speed data from the vehicle speed sensor 28. Based on the comparison, the reception controller 44 determines the position of the tire 21, 22, 23, or 24 in which the transmitter 30 that has transmitted the radio signal is located. Therefore, the receiver 40 can accurately determine the position of the associated tire 21, 22, 23, 24 or by taking into consideration of the speed of the vehicle 10, or the rotational speed of the associated tire 21, 22, 23, or 24.

It should be apparent to those skilled in the art that the present invention may be embodied in many other specific forms without departing from the spirit or scope of the invention. Particularly, it should be understood that the invention may be embodied in the following forms.

When the vehicle 10 is stopped or almost stopped because the vehicle 10 is caught in a traffic jam or waiting for a traffic light to turn green, the pattern of the voltage induced by the reception antenna 41 does not change much though the radio wave is transmitted from each transmitter 30 in the corresponding tire 21, 22, 23, or 24. Therefore, the present invention may be structured such that the reception controller 44 links the ID code included in the signal, which is transmitted from each transmitter 30, with the voltage pattern data 61, 62, 63, and 64 when the speed of the vehicle 10 detected by the vehicle speed sensor 28 is greater than or equal to a predetermined speed. The reception controller 44 may then determine from which of the tires 21, 22, 23, or 24 the data is received based on the ID code in the cases when the pattern of the voltage induced by the reception antenna 41 does not change much because the vehicle 10 is stopped or almost stopped. According to the above described structure, even when the vehicle 10 is stopped in a traffic jam or waiting for a traffic light to turn green, the reception controller 44 can identify one of the tires 21, 22, 23, or 24 that corresponds to the received data based on the ID code.

The present invention may also be structured to store the position information of each tire 21, 22, 23, and 24 and the ID code of the transmitter 30 that has transmitted the radio signal linking the position information with the ID code when the position of the tire 21, 22, 23, and 24 that has transmitted the radio signal is determined based on the pattern of the voltage obtained from the radio wave. According to the above described structure, even in the cases when the receiver 40 is not able to determine the position of the tire 21, 22, 23, or 24 that has transmitted the radio signal based on the pattern of the voltage obtained by receiving the radio wave when the vehicle 10 is stopped, the reception controller 44 can determine the position of the tire 21, 22, 23, or 24 that has transmitted the radio signal based on the ID code obtained from the received data.

The vehicle sensor 28 may be located in each transmitter 30, which is arranged in the corresponding tire 21, 22, 23, or 24. In this case, each transmitter 30 transmits the detected data representing the speed of the vehicle as part of the transmission data.

The present invention may be structured to have a number of reception antennas 41.

The reception antenna 41 may be located at any position of the vehicle 10 regardless of inside or outside of the vehicle passenger compartment. That is, the location of the reception antenna 41 is not restricted as long as the variation patterns of the level of the voltage induced by the reception antenna in accordance with the radio wave from the transmitters 30 differ from one another.

A temperature sensor may be located in the transmitter 30. In this case, the data representing the air pressure and the temperature in the associated tire 21, 22, 23, or 24 may be wirelessly transmitted from the transmitter 30.

An alarm may be located to notify that the air pressure in the associated tire 21, 22, 23, or 24 is abnormal. In this case, a loudspeaker, which is preinstalled in the vehicle 10, may be used as an alarm.

The monitoring apparatus of the present invention is not limited to a four-wheeled vehicle, but may also be applied to two-wheeled vehicles such as bicycles and bikes, multi-wheeled vehicles such as buses and trucks, or industrial vehicles such as forklifts.

Therefore, the present examples and embodiments are to be considered as illustrative and not restrictive and the invention is not to be limited to the details given herein, but may be modified within the scope and equivalence of the appended claims.

## Claims

1. A tire condition monitoring apparatus for monitoring the condition of tires (21, 22, 23, 24) of a vehicle (10), the apparatus comprising:
a plurality of transmitters (30), each of which is arranged in one of the tires (21, 22, 23, 24), wherein each transmitter (30) transmits a radio signal that includes data representing the condition of the corresponding tire (21, 22, 23, 24);
a reception antenna (41), which induces a voltage signal based on the receipt of the radio signal; and
a receiver (40) for receiving and processing the voltage signal from the reception antenna (41), the apparatus being **characterized in that**,
when one of the transmitters (30) transmits a radio signal, the receiver (40) determines the position of the tire (21, 22, 23, 24) in which the transmitter (30) that has transmitted the radio signal is located based on the pattern of the voltage signal induced by the reception antenna (41).

2. The apparatus according to claim 1, **characterized in that**, when one of the transmitters (30) transmits a radio signal, the level of the voltage signal induced by the reception antenna (41) varies in accordance with the rotation of the associated tire, and the receiver (40) determines the position of the tire (21, 22, 23, 24) in which the transmitter (30) that has transmitted the radio signal is located based on the variation pattern of the level of the voltage signal.

3. The apparatus according to claim 2, **characterized in that** the receiver (40) determines the position of the tire (21, 22, 23, 24) in which the transmitter (30) that has transmitted the radio signal is located based on the variation pattern of the level of the voltage signal and the rotational speed of the tire.

4. The apparatus according to claim 3, **characterized by** a vehicle speed sensor (28) for detecting the vehicle speed, wherein the vehicle speed correlates with the rotational speed of the tire (21, 22, 23, 24).

5. The apparatus according to any one of claims 1 to 4, **characterized in that** the receiver (40) stores data representing the position of each tire (21, 22, 23, 24) with respect to the vehicle (10) and reference pattern data in advance linking the position data with the reference pattern data, wherein the reference pattern data represents the pattern of the voltage signal, which is induced by the reception antenna (41) when the reception antenna receives the radio signal from the transmitter (30) located in each tire (21, 22, 23, 24).

6. The apparatus according to claim 5, **characterized in that** the receiver (40) determines the position of the tire (21, 22, 23, 24) in which the transmitter (30) that has transmitted the radio signal is located by comparing the pattern of the voltage signal induced by the reception antenna (41) with the reference pattern data.

7. The apparatus according to claim 5, **characterized in that** the reference pattern data represents the variation pattern of the level of the voltage signal induced by the reception antenna (41) during at least a full rotation of each tire (21, 22, 23, 24).

8. The apparatus according to claim 5, **characterized in that** the radio signal transmitted from each transmitter (30) includes an identification data, which is registered in each transmitter (30) in advance, and wherein, when the receiver (40) determines the position of the tire (21, 22, 23, 24) in which the transmitter (30) that has transmitted the radio signal is located, the receiver (40) stores the identification data included in the radio signal linking the identification data with the data representing the position of the tire.

9. A tire condition monitoring method for monitoring the condition of tires (21, 22, 23, 24) of a vehicle (10), the method comprising:
transmitting a radio signal from one of a plurality of transmitters (30), each of which is located in one of the tires (21, 22, 23, 24), wherein the radio signal includes data representing the condition of the corresponding tire; and
inducing a voltage signal based on the receipt of the radio signal by a reception antenna (41), the method being **characterized by**:
determining the position of the tire (21, 22, 23, 24) in which the transmitter (30) that has transmitted the radio signal is located based on the pattern of the voltage signal induced by the reception antenna (41).

10. The method according to claim 9, **characterized by** storing data representing the position of each tire (21, 22, 23, 24) with respect to the vehicle (10) and reference pattern data in advance linking the position data with the reference pattern data, wherein the reference pattern data represents the pattern of the voltage signal, which is induced by the reception antenna (41) when the reception antenna receives the radio signal from the transmitter (30) located in each tire (21, 22, 23, 24).
